# EUROPÄISCHE PATENTANMELDUNG

(11) **EP 0 827 900 A2**
(43) Veröffentlichungstag der Anmeldung: **11.03.1998**
(21) Anmeldenummer: 97115492.7
(22) Anmeldetag: 08.09.1997
(51) Int. Cl.: B62K 21/14

(54) **Federnde Zweirad-Lenkerstütze**

(30) Priorität: 06.09.1996 DE 29615659 U
(71) Anmelder: Simic, Tino, D-47799 Krefeld (DE)
(72) Erfinder: Simic, Tino, D-47799 Krefeld (DE)

(57) **Zusammenfassung**

AM RAHMEN IN RICHTUNG AUF DIE VORDERRADACHSE MONTIERTE FEDERNDE ZWEIRAD-LENKERSTÜTZE, die über einer Luft u. Öldämpfung gegenüber dem Rahmen abgefedert und mit einer asymmetrischen Drehverhinderung ausgestattet ist. Bei der der Fahrer mit einer handelsüblichen Luftpumpe die Härte der Federung den eigenen Wünschen anpassen kann und in der, gleichzeitig als Enddämpfung und Schmierung, Öl vorgesehen ist.

## Beschreibung

### TECHNISCHES GEBIET

Die Erfindung bezieht sich auf eine Vorrichtung gemäß dem ersten Teil des Patentanspruchs 1 (EP 89110422.6) zur federnden Aufhängung des Zweirad Lenkers am Fahrzeugrahmen so daß die durch Bodenunebenheiten wirkenden Stöße nicht an die fahrende Person weitergeleitet werden können.

### STAND DER TECHNIK u. KRITIK

Seit Jahren sind viele federnde Lenkerstützen bekannt, ohne daß es denen gelungen ist, den Anforderungen GUT UND KOSTENGÜNSTIG zu entsprechen, auch die Anmeldenummern (EP 89110422.6) u. (G 93 17 667.8) u. (G 94 18 649.9) haben nicht zum Erfolg geführt, weil sie entweder zu kompliziert, zu kostenintensiv oder zu schwer waren, damit nicht vermarktbar. Insbesondere war die Drehverhinderung bei allen mangelhaft ausgeführt, kräftemäßig den Ansprüchen nicht gewachsen oder zu kompliziert.

### AUFGABE

Die zuvor genannten Nachteile aufzuheben und auf einfache, günstige und dauerhaft sichere Weise eine gute Federung für die fahrende Person zu ermöglichen.

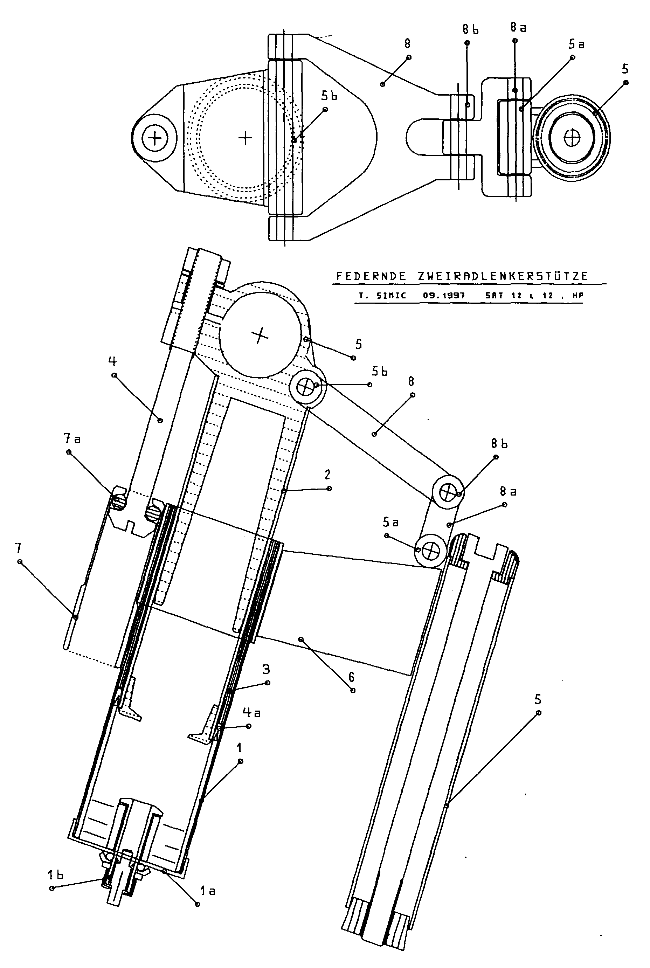

### DARSTELLUNG und BESCHREIBUNG DER ZEICHNUNG

Die vorgestellte Zweirad Lenkerstütze, die über eine Luft und Öldämpfung gegenüber dem Rahmen abgefedert ist, ist im wesentlichen aus zwei über ein Gleitmittel ineinander geführte Teile gebaut und wie folgt gelöst :
**1.) DIE BEFESTIGUNG,**
   Die federnde Sattelstütze ist über dem Befestigungsteil außerhalb des Rahmens, IN GLEICHER LINIE MIT DEN WIRKENDEN KRÄFTEN der Bodenstöße von dem Vorderrad, so befestigt, daß sie bei ihrer Federungsbewegung die kleinstmögliche Reibung zwischen den federnden Teilen aufweist und dadurch den bestmöglichen Federungskomfort bietet.
   **Zusätzlich ist**, auf der gegenüberliegenden Seite von der Achse der federnden Teile, ein Teil der Drehverhinderung vorgesehen, dessen Entfernung von der Achse der federnden Teile (bei dieser vorgestellten Ausführung) beliebig weit gewählt werden kann.
**2.) DER FEDERUNGSKOMFORT,**
   ist so gelöst, daß erstmals mittels einer handelsüblichen Fahrradluftpumpe, auf einfache Weise, eine sehr gute Federung, unabhängig von verschiedenen Gewichten der Benutzer und deren Komfortwünschen, in seiner vollen vorgesehenen Länge möglich ist.
**3.) Die Drehverhinderung (8) u. (8a)**
   schafft eine Verhinderung der gegenseitigen Verdrehung damit, daß sie die gegenseitigen Kräfte (aus 5a u. 5b) über drehbare Verbindungen zu einem gemeinsamen Drehpunkt (8b) überträgt und dort reibungslos aufhebt, wobei eine leichtgängige Führung der axial gegeneinander federnden Teile garantiert wird.
**Hier ist die wesentliche Verbesserung zu allen bis jetzt bekannten vorgestellt.**
Je größer der Abstand zwischen der Achse der federnden Teile und dem gemeinsamen Drehschnittpunkt der Drehverhinderung ist, desto günstiger sind Kräfteverhältnisse innerhalb des Aufbaus der Drehverhinderung. Ähnliche bis jetzt vorgestellte Drehverhinderungen hatten den Nachteil des gleichen Weges vom federnden Teil zum gemeinsamen Drehschnittpunkt und zurück zu dem stehenden Teil zu bewältigen. Deswegen war der Abstand zwischen der Achse der federnden Teile und dem gemeinsamen Drehschnittpunkt nicht beliebig lang ausführbar.
Die neu vorgestellte Drehverhinderung bietet den Vorteil des viel größeren Abstandes zwischen der Achse der federnden Teile und dem gemeinsamen Drehschnittpunkt, weil nur EIN langer Weg bewältigt werden muß und der Weg vom gemeinsamen Drehschnittpunkt zu dem stehenden Teil ganz kurz gehalten wird. Aus diesem Grund ist die Wirkungsweise der Drehverhinderung und deren Haltbarkeit wesentlich verbessert. Auch die Möglichkeit der Produktion ist wesentlich vereinfacht.
Dies ist insbesondere bei einer federnden Lenkerstütze von Vorteil, weil hier wesentlich höhere Kräfte bewältigt werden müssen, als bei einer federnden Sattelstütze

**Das äußere Rohr (Führungsrohr) (1)** ist über das Zwischenteil (6) und Befestigungsteil (5) am Zweirad - Rahmen in Richtung der Vorderradachse befestigt, im unteren Teil (1a) ist ein Luftventil (1b) angebracht und oben, gegenüber dem Zwischenteil (6) ist ein Anschlagteil (7) für die Schraube (4) befestigt. Oben am Befestigungsteil (5) ist ein Teil der Drehverhinderung (5b) befestigt.

**Das innere Rohr (2)** ist mit einer Lippendichtung (4a) gegen das Führungsrohr (1) abgedichtet, wird im Gleitlager (3) geführt und oben ist die Befestigung der Schraube (4), des Lenkers und der zweite Teil der Drehverhinderung (5b) angebracht.

**Die Schraube (4)** ist oben an dem Lenkerbefestigungsteil befestigt und dient gleichzeitig zur Lenkerbefestigung und Abstandsbegrenzung, so daß das Innenrohr nicht herausgezogen werden kann. Unten ist zwischen der Schraube (4) und dem Anschlagteil (7) eine Rückschlagdämpfung (7a) vorgesehen.

### BESTER WEG DER ERFINDUNGSAUSFÜHRUNG

Die vorgestellte federnde Zweirad-Lenkerstütze ist in ihren Ausführungen aus einfachen Einzelteilen konstruiert, dadurch kann ihre Produktion entweder zusammen mit den Zweirädern oder auch separat erfolgen, so daß sie auch nachträglich an jedem Zweirad angebracht werden kann.

### GEWERBLICHE ANWENDBARKEIT

Die Erfindung bietet den Vorteil, daß sie nachträglich durch einfache Handhabung an jede bekannte Zweiradrahmenausführung anzubringen ist und somit sehr breit flächig an vielen verschiedenen Zweirädern Einsatzmöglichkeiten finden kann.

## Patentansprüche

1. **AM RAHMEN IN RICHTUNG AUF DIE VORDERRADACHSE MONTIERTE UND MIT EINER ASYMMETRISCHEN DREHVERHINDERUNG AUSGESTATTETE FEDERNDE ZWEIRAD LENKERSTÜTZE,** die über einer Luft u. Öldämpfung gegenüber dem Rahmen abgefedert ist.
**DADURCH GEKENNZEICHNET,** daß das Führungsrohr (1) über einem Befestigungsteil (5) im Rahmen an der Stelle, wo sonst die starre Lenkerstütze befestigt wird, befestigt ist, daß der federnde Teil der Lenkerstütze (2) vom Führungsrohr koaxial umgeben ist, in der er axial gegen den Druck der Luft verschiebbar ist und gleichzeitig das Lenkradrohr Aufnahmeteil ist und mit zwei asymmetrischen, gabelähnlichen, gelenkig miteinander verbundenen Drehverhinderungsteilen ausgestattet, ist.

2. Sattelstütze nach Anspruch 1, dadurch gekennzeichnet daß die Lenkerstütze überwiegend aus Leichtmetall hergestellt ist.

3. Sattelstütze nach Anspruch 1, dadurch gekennzeichnet, daß die Lenkerstütze überwiegend aus Metallteilen hergestellt ist.
